# EUROPÄISCHE PATENTANMELDUNG

(11) **EP 2 479 427 A1**
(43) Veröffentlichungstag der Anmeldung: **25.07.2012**
(21) Anmeldenummer: 11151847.8
(22) Anmeldetag: 24.01.2011
(51) Int. Cl.: F03D 7/02, F03D 11/02

(54) **Verfahren zur Schwingungsdämpfung eines Triebstrangs in einer Windturbine, Windturbine und Verwendung einer Bremsvorrichtung**

(71) Anmelder: Siemens Aktiengesellschaft, 80333 München (DE)
(72) Erfinder: Wohlleb, Matthias, 52064, Aachen (DE)

(57) **Zusammenfassung**

Die Erfindung betrifft ein Verfahren zur Schwingungsdämpfung eines Triebstrangs (22) in einer Windturbine (13), welcher Triebstrang (22) einen Rotor (14) mit einem Generator (45) verbindet. Dabei werden Parameterwerte (P, Pₜ₀, Pₜ₁) ermittelt, die eine Schwingung (S) des Triebstrangs (22) repräsentieren, und werden auf Basis der ermittelten Parameterwerte (P, Pₜ₀, Pₜ₁) gesteuert unter Verwendung einer Bremsvorrichtung (43) Dämpfungskräfte (D) auf den Triebstrang (22) ausgeübt, die gegen die Schwingung (S) des Triebstrangs (22) wirken. Außerdem betrifft die Erfindung eine Windturbine (13) sowie die Verwendung einer Bremsvorrichtung (43).

## Beschreibung

Die vorliegende Erfindung betrifft ein Verfahren zur Schwingungsdämpfung eines Triebstrangs in einer Windturbine, welcher Triebstrang einen Rotor mit einem Generator verbindet. Sie betrifft außerdem eine solche Windturbine sowie die spezielle Verwendung einer Bremsvorrichtung in einer solchen Windturbine.

In einer Windturbine wird die kinetische Energie des Windes dazu benutzt, einen Rotor in eine Rotationsbewegung zu bringen. Diese Rotationsbewegung wird über einen Triebstrang in einen Generator übertragen, der aus der Rotationsenergie elektrische Energie generiert.

Aufgrund der Kraftübertragung vom Rotor in den Generator und aufgrund weiterer Einflüsse (s.u.) sind der Triebstrang und die ihn umgebenden Komponenten der Windturbine einer Vielzahl von Kräften ausgesetzt, aus denen Schwingungen, d.h. Vibrationen im Triebstrang resultieren. Hierbei kann grundsätzlich unterschieden werden zwischen axialen Schwingungen, die sich also entlang der Achse bzw. mehrerer Achsen des Triebstrangs ausbreiten, und radialen Schwingungen, die quer zu dieser Achse bzw. zu diesen Achsen verlaufen. Solche Schwingungen haben eine Reihe von Ursachen:
Erstens spielen äußere Faktoren, wie beispielsweise die Windgeschwindigkeit, die Windrichtung, die Außentemperatur oder Turbulenzen, eine Rolle. Diese Einflussfaktoren üben Kräfte auf den Rotor aus, die nicht alle in axialer Richtung des Triebstranges bzw. der Achse des Rotors wirken. Hierdurch werden vor allem niederfrequente Schwingungen bis ca. 10 Hz im Triebstrang hervorgerufen.
Zweitens wirkt im Betrieb der Windturbine ein komplexes Gesamtsystem, dass aus zahlreichen miteinander mechanisch verbundenen Komponenten besteht. Oftmals ist zum Beispiel ein Übersetzungsgetriebe vorgesehen, das die relativ langsame Rotation des Rotors bzw. einer ersten Welle des Triebstrangs in eine schnellere Rotation einer zweiten Welle des Triebstrangs übersetzt. In diesem Getriebe entstehen automatisch Vibrationen durch die Verbindung der beiden Triebstrangkomponenten mittels Zahnrädern oder anderen Kraftübertragungselement, also Torsionsschwingungen. Torsionskräfte übertragen sich auch vom Getriebe auf das Maschinengehäuse, d.h. den inneren Aufbau der Kanzel. Außerdem entstehen auch durch das Getriebe axiale Schwingungen, meist im höherfrequenten Bereich oberhalb 10 Hz.
Drittens entstehen Nick- und Giermomente durch Zwangskräfte in Verbindungen zwischen der Kanzel und Komponenten, die in der Kanzel gelagert sind. Diese Zwangskräfte entstehen bei der Montage, aber auch durch Gewichtsverteilung, sowie zusätzlich durch Anregungen der Eigenfrequenzen des Triebstrangs. Durch die Nick- und Giermomente am Triebstrang entstehen Kräfte, die auf den Untergrund in der Kanzel der Windturbine wirken und diese beschädigen können. Die Eigenfrequenz einer Einzelkomponente ist dabei abhängig von ihrem Gewicht bzw. ihrer Trägheit. Durch Zusammenfügen eines Komponentensystems bei der Montage tritt ein neues Systemverhalten und somit neue Eigenfrequenzen zutage.

Weitere Schwingungen können dadurch induziert werden, dass vom Rotor aus gesehen hinter einem solchen Übersetzungsgetriebe eine zweite Welle angeordnet ist, an der eine Bremsvorrichtung ansetzt, und die zweite Welle über eine Kupplung in einen hinteren Bereich der Kanzel in Richtung des Generators führt. Beispielsweise kann durch diese Kupplung ein Niveauausgleich in Richtung des tiefer oder höher als das Übersetzungsgetriebene gelagerten Generators realisiert sein. Auch diese Kupplung kann im Betrieb Schwingungen hervorrufen. Die hier überblicksartig zusammengefassten Schwingungen und Krafteinwirkungen im Bereich des Triebstrangs stellen im Betrieb der Windturbine ein Problem dar, da sie die Lebensdauer der Windturbine als Ganzes bzw. einzelner ihrer Komponenten ggf. erheblich verringern bzw. deren Funktionsfähigkeit auf Dauer gefährden können. Insbesondere höherfrequente Schwingungen ab circa 10 Hz können bei großen Amplituden starke Beschädigungen hervorrufen, vor allem im Getriebe, im Generator und auch an der Kanzel der Windturbine. Sie setzen sich oft über den gesamten Triebstrang hinweg fort und können sogar durch die Übersetzung in einem Getriebe noch verstärkt werden. In der VDI-Richtlinie VDI 3834, deren Offenbarungsgehalt explizit als Teil der hier vorliegenden Anmeldung angesehen wird, sind die Grundlagen für die Messung und Beurteilung von mechanischen Schwingungen von Windturbinen und ihrer Komponenten niedergelegt. Unter anderem ergeben sich daraus Belastungsgrenzen durch Vibrationen, die möglichst nicht überschritten werden sollten.

Die erwähnten Schwingungen und Kräfte können mithilfe verschiedener Gegenmaßnahmen ausgeglichen werden, so dass möglichst keine Zwangskräfte vom Getriebe bzw. Triebstrang auf die Kanzel übertragen werden. Derzeit wird der Triebstrang beispielsweise auf dem Gehäuse der Kanzel elastisch gelagert. Diese Lagerung erfolgt beispielsweise durch eine Dreipunkt- oder Vierpunkt-Lagerung, die also an drei bzw. vier Punkten des Triebstrangs eine elastische, federnde Verbindung zwischen dem Untergrund und dem Triebstrang bzw. dem Übersetzungsgetriebe umfasst. Hierbei kann der Triebstrang an mindestens einem Punkt entlang seines Längsverlaufs voll- oder teilumfänglich umfasst werden, so dass der Triebstrang auch seitlich und nach oben hin stabilisiert wird. Als Puffer solcher Lager dienen axial weiche Elastomere, beispielsweise in Form von Elastomerbuchsen, die den Kontakt zwischen dem Getriebe bzw. einer Triebstrangkomponente und der jeweiligen Lagerstütze bzw. dem jeweiligen Lagerring bilden.

Eine Dreipunktlagerung kann beispielsweise ein Hauptlager und eine Getriebeabstützung umfassen: Das Hauptlager weist einen Lagerring auf, der eine Welle des Triebstrangs, d.h. eine Triebstrangkomponente, umschließt. Das Hauptlager nimmt damit sowohl axiale als auch radiale Kräfte auf. Die GetriebeAbstützung lagert ein Übersetzungsgetriebe teilumfassend von beiden Seiten, d.h. in horizontaler Richtung quer zur Achse des Triebstrangs. Es ist axial beweglich ausgebildet und nimmt daher auch Torsionskräfte auf. Dieses Lager dient auch dem Ausgleich gleich von Nick- und Giermomenten. Eine Vierpunktlagerung umfasst ein zweites Lager, das eine Welle des Triebstrangs umfasst und bietet dadurch den Vorteil einer erhöhten Systemstabilität durch zusätzliche Aufnahme axialer Kräfte.

Zusätzlich zu diesem passiven Ausgleich von Schwingungen mithilfe von Lagern kann eine aktive Schwingungsdämpfung vorgesehen sein. Hierzu können beispielsweise an den Lagern aktiv Kräfte auf den Triebstrang bzw. auf andere mit den Triebstrang verbundene Komponenten der Windturbine ausgeübt werden, die Schwingungen des Triebstrangs bzw. der mit dem Triebstrang verbundenen Komponenten entgegenwirken. Solche aktiven Dämpfungskomponenten erfordern jedoch zusätzlichen Bauraum innerhalb der Kanzel der Windturbine und sind zudem kostspielig bereitzustellen und wartungsintensiv. Eine andere Art der aktiven Schwingungsdämpfung erfolgt mittels Umrichtern, also elektronischen Bauteilen. Durch gezielte Regelung eines Umrichters können Lasten von Seiten des Generators her reduziert oder vergrößert werden. Eine Steuerung des Umrichters mit dem Ziel der Schwingungsdämpfung ist also möglich und wird derzeit auch realisiert; sie reduziert jedoch die Effektivität der Energiegewinnung und bedeutet außerdem, dass ein zusätzlicher Einflussfaktor bei der Steuerung des Umrichters eine Rolle spielt.

Vor diesem Hintergrund ist es Aufgabe der vorliegenden Erfindung, eine verbesserte Möglichkeit der Schwingungsdämpfung bereitzustellen, die bevorzugt insbesondere höchstens geringen zusätzlichen Installations- bzw. Wartungsaufwand mit sich bringt und/oder die bevorzugt im Vergleich zur rein passiven Schwingungsdämpfung eine höhere Dämpfungseffektivität, besonders bevorzugt bei höherer Wirkgenauigkeit, bewirkt.

Diese Aufgabe wird durch ein Verfahren gemäß Anspruch 1 und eine Windturbine gemäß Anspruch 10 sowie durch die Verwendung einer Bremsvorrichtung gemäß Anspruch 15 gelöst.

Entsprechend wird das Verfahren der eingangs genannten Art erfindungsgemäß dadurch weitergebildet, dass Parameterwerte ermittelt werden, die eine Schwingung des Triebstrangs repräsentieren, und auf Basis der ermittelten Parameterwerte gesteuert unter Verwendung einer Bremsvorrichtung Dämpfungskräfte auf den Triebstrang ausgeübt werden, die gegen die Schwingung des Triebstrangs wirken.

Aus denen Schwingungen des Triebstranges können repräsentative Parameterwerte abgeleitet werden, beispielsweise Frequenzen und Amplituden einer Schwingungskurve. Im Umkehrschluss kann man auch sagen dass bestimmte Parameterwerte auch das Schwingungsverhalten des Triebstrangs repräsentieren. Hierunter fallen unter anderem die Drehzahl und das Drehmoment des Triebstrangs, aus denen indirekt geschlossen werden kann, welche Kräfte durch die Rotation des Triebstrangs bewirkt werden, die zu Vibrationen führen können. Insbesondere repräsentieren solche Parameterwerte das Schwingungsverhalten des Triebstrangs, die direkt aus einer Vibrationsmessung hervorgehen, also beispielsweise auf Basis einer Kräftemessung am Triebstrang ermittelt werden können.

Die Untersuchung solcher geeigneter Parameter dient im Rahmen des erfindungsgemäßen Verfahrens dazu, Rückschlüsse auf das Schwingungsverhalten zu ziehen und hieraus Steuerbefehle für eine aktive Schwingungsdämpfungsvorrichtung abzuleiten. Als Schwingungsdämpfungsvorrichtung bzw. als Bestandteil einer solchen wird nun gemäß der Erfindung die Bremsvorrichtung der Windturbine verwendet:
Es ist nämlich in verschiedenen Gefahrensituationen bzw. kritischen Betriebssituationen der Windturbine notwendig, eine Bremsung des Triebstrangs vorzunehmen. Dies gilt insbesondere dann, wenn einzelne Komponenten der Windturbine außer Betrieb sind und durch die Rotationsbewegung des Triebstrangs weitere Schäden verursacht werden können. Gleiches gilt für Wartungssituationen, in denen die Windturbine durch Fachpersonal gewartet wird. Das Fachpersonal befindet sich hierfür üblicherweise in der Kanzel der Windturbine und ist durch die Rotationsbewegung des Triebstrangs sowohl an der Ausführung seiner Tätigkeiten behindert als auch durch die enormen Kräfte, die durch diese Rotation verursacht werden, stark gefährdet. Dies bedeutet, dass der Triebstrang bei einer Wartung in der Regel komplett abgebremst und arretiert werden muss, um Gefährdungen und Behinderungen für das Personal auszuschließen.

Auch bei extremen Windverhältnissen, insbesondere Stürmen oder Orkanen, ist eine vollständige oder teilweise Bremsung der Rotationsbewegung des Triebstrangs notwendig. Nur so kann sichergestellt werden, dass bei hohen Windgeschwindigkeiten keine Schäden an Funktionsteilen der Windturbine, etwa am Rotor oder im Generator, entstehen.

Entsprechend sind heutige industriell eingesetzte Windturbinen mit großen Leistungen, d. h. größer als 100 kW, in der Regel immer mit Bremsvorrichtungen ausgestattet, die eine teilweise und auch vollständige Bremsung der Rotationsbewegung des Triebstrang erlauben. Solche Bremsvorrichtungen bestehen üblicherweise aus mindestens einem Bremssattel mit (jeweils) mindestens einem Bremsbelag, wobei der Bremssattel eine Bremsscheibe so umfasst, dass der Bremsbelag gegen die Bremsscheibe gedrückt werden kann und somit die Bremsscheibe in ihrer Bewegung bremst. Die Bremsscheibe ist hierzu an einer Triebstrangkomponente des Triebstrangs der Windturbine fest angebracht. Sie rotiert daher mit derselben Rotationsgeschwindigkeit wie die Triebstrangkomponente; durch das Abbremsen ihrer Rotationsbewegung wird somit umgekehrt auch die Triebstrangkomponente mit abgebremst.

Die Erfindung macht es sich also zu Nutze, dass eine ohnehin vorhandene Funktionskomponente der Windturbine, nämlich die Bremsvorrichtung, nun zusätzlich dazu genutzt wird, eine aktive Schwingungsdämpfung auf Basis der oben erwähnten aus den Parameterwerten abgeleiteten Steuerbefehle durchzuführen. Dabei kann die Bremsvorrichtung als eine zusätzliche aktive Dämpfungsvorrichtung fungieren, jedoch auch als die alleinige aktive Dämpfungsvorrichtung. Bei Betrieb als alleinige aktive Dämpfungsvorrichtung ist gewährleistet, dass keine wesentlichen Zusatzmaßnahmen zur Installation einer aktiven Schwingungsdämpfung notwendig sind, da zumindest die mechanische Hauptkomponente der aktiven Schwingungsdämpfung, nämlich die Bremsvorrichtung, ohnehin vorhanden ist. Es bedarf also lediglich eine Adaption der Steuerung dieser Bremsvorrichtung, so dass diese zugleich als Bremse und als aktive Dämpfungsvorrichtung verwendet werden kann.

Bei der Generierung von Steuerbefehlen für die Bremsvorrichtung kann prinzipiell unterschieden werden zwischen Bremsbefehlen und Dämpfungsbefehlen. Bremsbefehle sind dabei die Steuerbefehle, die einer gezielten Abbremsung der Rotation des Triebstrangs durch die Bremsvorrichtung dienen, Dämpfungsbefehle sind dagegen die Steuerbefehle, die der aktiven Schwingungsdämpfung dienen. Zwischen den Brems- und den Dämpfungsbefehlen erfolgt bevorzugt eine Abstimmung, so dass Wechselwirkungen zwischen Bremsen und Dämpfen mithilfe der Bremsvorrichtung schon im Vorhinein bzw. beim Betrieb der Bremsvorrichtung wechselseitig Berücksichtigung finden. Wird die Bremsvorrichtung mithilfe eines Bremsbefehls zur Abbremsung des Triebstrangs genutzt, so ergeben sich ggf. Auswirkungen auf das Schwingungsverhalten des Triebstrangs. Entsprechend vorausberechnete bzw. simultan zum Bremsprozess ermittelte Dämpfungsbefehle können daher abgeleitet werden, so dass das Bremsverhalten der Bremsvorrichtung im Betrieb gleich so eingestellt wird, dass einer Verstärkung von Vibrationen des Triebstrangs aktiv entgegengewirkt wird. Andersherum zeitigen aktive Dämpfungseingriffe in den Triebstrang mithilfe der Bremsvorrichtung auch eine Bremswirkung. Soll parallel zur Schwingungsdämpfung auch noch der Triebstrang abgebremst werden, so kann daher bei einem abgestimmten Brems- und Dämpfungsvorgang diese Bremswirkung gleich mit in die Ermittlung der aufzubringen Bremskraft mit einbezogen werden. Im Endeffekt können bei einer Abstimmung von Brems- und Dämpfungsvorgang mithilfe der Bremsvorrichtung die beiden Arten von Steuerbefehlen überlagert werden, um so einen kombinierten Brems-/Dämpfungsbefehl abzuleiten. Eine solche Überlagerung kann sowohl elektronisch erfolgen als auch durch wechselseitige Beeinflussung von Kräften aus mehreren an der Bremsvorrichtung wirkenden mechanischen Aktuatoren als auch durch eine Kombination aus diesen beiden Überlagerungsprinzipien. Das Resultat aus der Generierung eines kombinierten Brems-/Dämpfungsbefehls ist in jedem Fall die Einspeisung einer kombinierten Brems-/Dämpfungskraft in den Triebstrang.

Mithilfe der Bremsvorrichtung wird also nicht nur ein Abbremsen des Triebstrangs durchgeführt, sondern es erfolgt zusätzlich eine gezielte, willentliche Krafteinwirkung mit dem Zweck der Schwingungsdämpfung gegen Schwingungen des Triebstrangs. Die entsprechenden Dämpfungs-Steuerbefehle werden daher abgeleitet aus den Parameterwerten zum Schwingungsverhalten des Triebstrangs. Sie steuern die Bremsvorrichtung so, dass sie zu bestimmten festgelegten Zeiten genau eingestellte Kräfte in den Triebstrang einbringt, die gegen das Schwingungsverhalten des Triebstrangs wirken, wie es aus den Parameterwerten abgeleitet wurde.

Die Steuerbefehle werden in einer Steuereinrichtung (also einer Kontrolleinheit) in der und/oder verbunden mit der Windturbine generiert. Es handelt sich also um eine Steuereinrichtung zur Bremskraftregelung, die zusätzlich im Betrieb Vibrationen bzw. Schwingungen mindestens einer Triebstrangskomponente des Triebstrangs aktiv entgegenwirkt. Die Steuereinrichtung fährt damit eine Art "Brems- bzw. Dämpfungsprogramm", das aus den oben erwähnten Parametermessungen die Steuerbefehle ableitet, die dazu geeignet sind, die Triebstrangkomponente gegenläufig zur Vibrationsfrequenz abzubremsen.

Zusätzlich zur aktiven Schwingungsdämpfung mithilfe der Bremsvorrichtung kann auch eine passive Schwingungsdämpfung, beispielsweise durch entsprechende Lagerung und Federung vorgesehen sei. Im Sinne der doppelten Absicherung und zur Erhöhung der Dämpfungseffektivität ist dies bevorzugt.

Entsprechend umfasst eine erfindungsgemäße Windturbine einen Rotor und einen Generator, die über einen Triebstrang miteinander verbunden sind, sowie eine Bremsvorrichtung und eine Steuereinrichtung. Dabei leitet die Steuereinrichtung im Betrieb aus Parameterwerten, die eine Schwingung des Triebstrangs repräsentieren, Steuerbefehle zur Ausübung von Dämpfungskräften auf den Triebstrang unter Verwendung der Bremsvorrichtung ab, welche Dämpfungskräfte gesteuert gegen die Schwingung des Triebstrangs wirken.

Die Steuereinrichtung ist also so ausgebildet, dass sie entsprechend dem erfindungsgemäßen Verfahren aus den Parameterwerten Steuerbefehle ableitet, die der gezielten Steuerung der Bremsvorrichtung zur Schwingungsdämpfung dienen.

Die Erfindung umfasst auch die Verwendung einer Bremsvorrichtung zur Schwingungsdämpfung eines Triebstrangs in einer Windturbine, welcher Triebstrang einen Rotor mit einem Generator verbindet, wobei Parameterwerte ermittelt werden, die eine Schwingung des Triebstrangs repräsentieren und auf Basis der ermittelten Parameterwerte gesteuert unter Verwendung der Bremsvorrichtung Dämpfungskräfte auf den Triebstrang ausgeübt werden, die gegen die Schwingung des Triebstrangs wirken.

Weitere besonders vorteilhafte Ausgestaltungen und Weiterbildungen der Erfindung ergeben sich auch aus den abhängigen Ansprüchen sowie der nachfolgenden Beschreibung. Dabei kann das erfindungsgemäße Verfahren bzw. die erfindungsgemäße Verwendung auch entsprechend den abhängigen Ansprüchen zur Windturbine weitergebildet sein und umgekehrt.

Derzeit wird die Steuerung der Bremswirkung bei Bremsvorrichtungen in Windturbinen durch mechanische Übertragungssysteme, in der Regel hydraulisch oder pneumatisch übertragen. Denkbar sind auch andere mechanische Übertragungssysteme wie etwa durch Schubstangen- und/oder Zahnrad-Getriebe und/oder Seilzüge oder gar durch direkte menschliche Einwirkung. Bevorzugt erfolgt die Steuerung der Bremsvorrichtung elektronisch. Es werden also elektronische Steuerbefehle generiert, die über Übertragungsleitungen direkt an einen Aktuator übertragen werden und von diesem durch entsprechende Einstellung der Position der Bremsvorrichtung umgesetzt werden können. Eine indirekte Übertragung, etwa mittels hydraulischer Transmissionsfluide mit entsprechenden Fehler- und Wartungsanfälligkeiten und längeren Reaktionszeiten ist dann nicht vonnöten. Die elektronische Kontrolle und Ansteuerung ermöglicht es vielmehr auch, sehr fein abgestimmte, beispielsweise pulsierende, Brems- und Dämpfungswirkungen zu erzielen, und dies praktisch in Echtzeit, nämlich im Millisekundenbereich. Zudem ist es möglich, mit einem rein elektronischen Regelungssystem einen geschlossenen Regelkreislauf zu realisieren, bei dem eine Steuereinrichtung zur elektronischen Bremskraftregelung mit einer Auswertungseinheit verbunden ist (bzw. eine solche umfasst), die Brems- und/oder Dämpfungs-Messsignale aus einer Messung der Brems- bzw. Dämpfungswirkung verarbeitet, so dass die Steuereinrichtung aus den Ergebnissen dieser Signalverarbeitung verfeinerte Steuerbefehle zur Brems- bzw. Dämpfungskraftregelung ableiten kann. Es wird hier also ein selbstregelndes System zur Verfügung gestellt, bei dem auch trotz des Verschleißes, der unweigerlich bei Bremsvorrichtungen auftritt, jederzeit eine genaue Brems- und Dämpfungskrafteinstellung möglich ist, auch im laufenden Betrieb der Bremsvorrichtung.

Bevorzugt wird als Bremsvorrichtung eine eine Keilbremse umfassende Bremsvorrichtung verwendet, die besonders bevorzugt mit einer elektronischen Bremskraftregelung gesteuert wird. Entsprechend umfasst die erfindungsgemäße Windturbine eine Bremsvorrichtung, die eine Keilbremse, bevorzugt eine elektronische Keilbremse umfasst.

Die Verwendung einer Keilbremse im Rahmen der Bremsvorrichtung weist mehrere entscheidende Vorteile gegenüber dem Stand der Technik mit herkömmlichen Bremsvorrichtungen der oben beschriebenen Art (pneumatisch bzw. hydraulisch gesteuerte Sattelbremsen) auf. Insbesondere ist zu erwähnen, dass zum Bremsen in der Regel ein geringerer Kraftaufwand notwendig ist bzw. mit derselben Kraft eine größere Bremswirkung der Bremsvorrichtung erzielbar ist. Dadurch kann auch eine effektivere Dämpfungswirkung erzielt werden. Außerdem kann eine Keilbremse sehr präzise gesteuert werden und bedarf keines hydraulischen bzw. pneumatischen Zuleitungssystems, so dass die oben erwähnten technischen Probleme solcher Systeme vermieden werden können. Insbesondere fallen die Filterung von Transmissionsfluiden sowie deren Kühlung vollständig weg. Stattdessen ist bei der Keilbremse lediglich ein Aktuator notwendig, der den Bremskeil so verschiebt, dass sich eine gewünschte Brems- bzw. Dämpfungswirkung ergibt, bzw. so, dass die momentane Brems- bzw. Dämpfungswirkung reduziert wird. In Bezug auf die Schwingungsdämpfung ergibt sich insbesondere in Verbindung mit einer elektronischen Steuerung einer Keilbremse eine sehr fein abstimmbare Dämpfungswirkung, die zeitgenau dann ausgeübt werden kann, wenn die ein Maximum bzw. ein Minimum in der Schwingungsamplitude zu erwarten ist, so dass Maxima und/oder Minima entsprechend im Betrag reduziert werden können.

Keilbremsen werden heute probeweise in Automobilen als neuartige Bremssysteme eingesetzt. Beispielsweise kann in diesem Zusammenhang auf den Artikel Gombert, Bernd / Philip Gutenberg: "Die elektronische Keilbremse", Automobiltechnische Zeitschrift 11/08, 108. Jahr, November 2006, S. 904-912 verwiesen werden. Dieser Artikel gibt auch einen Vergleich zwischen konventionellen hydraulischen Bremssystemen und einer elektronischen Keilbremse wieder - jeweils für Bremssysteme im automobilen Anwendungsfeld. Der Artikel resümiert, dass die elektronische Keilbremse geringere Kraftaufwände und damit weniger Energie benötigt, um dieselbe Bremskraft zu erreichen wie andere automobile Bremssysteme.

Die Verwendung von Keilbremsen im Rahmen von Windturbinen ist bisher nicht bekannt. Über die eben erwähnten Vorteile hinaus ist ihr Einsatz im Windturbinenbereich auch deshalb besonders effektiv, weil die Größen der auftretenden Kräfte sowie die potenziell durch Reibungskräfte entstehende Wärmeentwicklung bedeutend größer sind als bei der Anwendung in einem Personenkraftwagen. Zudem muss die Bremsung im Gegensatz zu Kraftfahrzeugen in einer Windturbine vollautomatisch und ohne menschliche Nachregelung erfolgen, während der Aktuator beim Betrieb der Bremse im Automobil im Endeffekt der Mensch, nämlich der Fahrer ist. Gleiches gilt auch für die Nutzung einer Keilbremse zur Schwingungsdämpfung. Versuche des Erfinders haben ergeben, dass der Betrieb von Keilbremsen im Windturbinenbereich so verlässlich ist, dass sie erst recht dort verwendet werden können, wobei sich in dieser großtechnischen Anwendung die Vorteile sogar noch potenzieren: Erstens sind die oben beschriebenen Probleme bei Bremsvorrichtungen gemäß dem Stand der Technik deutlich prägnanter als bei technischen Anwendungen in der Größenordnung von Verbrennungskraftmaschinen mit ca. 100 kW, da Windturbinen moderner Bauart durchaus Nennleistungen über 1 MW haben. Zweitens ist aufgrund der Größe der Anlagen auch ein deutlich größerer Bauraum für die Bremsvorrichtung vorhanden, so dass im Endeffekt Keilbremsen einfacherer Konstruktionsart verwendet werden können und dennoch sogar noch zu einem Platzeinsparungseffekt beitragen. So sind beispielsweise die Bremsscheiben in Windturbinen entsprechend erheblich größer und bieten daher mehr Angriffsfläche für den Bremskeil der Keilbremse als dies im Automobil-Motorraum der Fall ist. Drittens spielt hier die Kraftübertragung vom Aktuator zur eigentlichen Bremse eine bedeutend wichtigere Rolle als im Automobilbereich. Zuletzt bietet die Keilbremse sogar durch ihre erheblich feinere Steuerbarkeit die besonders effektive Möglichkeit, als Zusatzeffekt dämpfend gegen Vibrationen zu wirken.

Als besonders zielführend hat es sich erwiesen, die Steuerbefehle zur Ansteuerung der Bremsvorrichtung zur Aktivierung der Dämpfungskräfte in Abhängigkeit von Resonanzfrequenzen von Komponenten der Windturbine abzuleiten. Die Resonanzfrequenzen werden hierzu vor Inbetriebnahme der Windturbine, bevorzugt durch Simulation und/oder Messungen, und/oder im laufenden Betrieb der Windturbine ermittelt. Als Basis einer Messung von Resonanzfrequenzen vor Inbetriebnahme der Windturbine kann auch ein Prototyp desselben Windturbinen-Bautyps oder eines im Wesentlichen analog aufgebauten Bautyps dienen.

Die Resonanzfrequenzen können dabei sowohl eine Grundresonanzfrequenz als auch deren Oberfrequenzen umfassen. Sie können sich auf Einzelkomponenten der Windturbine, etwa ein Übersetzungsgetriebe, der Generator, der Triebstrang oder die Kanzel, beziehen, jedoch umfasst der Begriff der "Komponente" auch die gesamte Windturbine mit ihren Resonanzfrequenzen. Durch Vorabermittlung und/oder durch Ermittlung der Resonanzfrequenzen im laufenden Turbinenbetrieb (auch in bestimmten vordefinierten Prüfungs-Zeitabständen) können die Resonanzfrequenzen erkannt und ihnen ganz gezielt in der Folge entgegengewirkt werden. Hierdurch wird ein "Aufschaukeln" von Einzelkomponenten bzw. des gesamten Windturbinensystems durch Vibrationen des Triebstrangs verhindert, was sich als besonders effektiv bei der Vermeidung von technischen Problemen herausgestellt hat: Gerade durch Verhindern eines solchen Aufschaukelns werden besonders starken Bewegungen ausgeschlossen, wodurch der Verschleiß und die Materialermüdung am stärksten aktiv reduziert werden können.

Im Betrieb einer Windturbine ist grundsätzlich zu unterscheiden zwischen dem Schub- und dem Zugbetrieb: Beim Zugbetrieb treibt der Wind den Rotor so stark an, dass vom Rotor aus Kräfte auf den Triebstrang wirken, die letzteren antreiben.

Beim Schubbetrieb gilt das umgekehrte Prinzip, d.h. die Trägheit des rotierenden Triebstrangs (und der mit ihm verbundenen rotierenden Teile im Generator und ggf. in einem Übersetzungsgetriebe) bewirkt, dass der Rotor durch den Triebstrang angetrieben wird, so dass der Rotor im Endeffekt eine Rotationsgeschwindigkeit erreicht, die er nicht aufgrund des vorherrschenden Windes hält, sondern aufgrund der Kräfte aus dem Triebstrang. Der Triebstrang setzt durch seine träge Bewegung die Rotation des Rotors fort, obwohl eigentlich nicht ausreichend Wind für diese Rotorbewegung vorhanden wäre. Im Schubbetrieb wirken daher auch andere Kräfte im Triebstrang, im Speziellen in einem Übersetzungsgetriebe, wenn vorhanden:
In derartigen Übersetzungsgetrieben erfolgt heute eine Übertragung zwischen schräg verzahnten Zahnrädern. Hierdurch ergibt sich in jeder Radstellung zweier Zahnräder zueinander eine größere Kontaktfläche zwischen den Zähnen im Vergleich zu Zahnrädern gerade ausgerichteten Zähnen. Durch diese Abschrägung der Zähne werden Torsionskräfte teilweise axial als auch in radialer Richtung abgestützt. In dem Moment, wo der Zugbetrieb der Windturbine in einen Schubbetrieb übergeht, ergeben sich andere Kräfteverhältnisse zwischen den Zahnrädern, da nun die jeweils anderen (im Zugbetrieb nicht kontaktierten) Kontaktflächen der jeweiligen Zähne aufeinandertreffen. Das Getriebe und der Triebstrang sind einer Hysterese unterworfen, die Folge ist eine Umstellung in eine andersgerichtete Verformung des Triebstrangs aufgrund sich umkehrender Torsionskräfte und auch ein andersgerichtetes Nick- bzw. Giermoment des Triebstrangs. Während dieses durch die Hysterese bedingten langsameren Umstellungsvorgangs ergeben sich Erschütterungen und unerwünschte Schwingungen. Auch im umgekehrten Fall einer Umstellung von Schub- auf Zugbetrieb ist ein solches Verhalten mit umgekehrten Vorzeichen zu verzeichnen, doch geht hier der Umstellungsvorgang der Kräfte in der Regel schneller vonstatten: Der Rotor erfährt durch den Wind meist eine näherungsweise kontinuierliche Energiezufuhr, während im Schubbetrieb ja nur Restenergie aus der Bewegung des Triebstrangs und der mit ihm verbundenen Komponenten verbraucht wird. Die kontinuierliche Energiezufuhr in den Rotor bewirkt auch, dass sich das System aus Rotor, Triebstrang, Getriebe und Generator schneller wieder stabilisiert und daher Vibrationen relativ schnell - quasi von selbst (ggf. unterstützt durch passive Dämpfungsmechanismen) - egalisiert werden.
Vor diesem Hintergrund hat es der Erfinder als besonders vorteilhaft erkannt, wenn die Dämpfungskräfte bei einem Schubbetrieb des Triebstrangs ausgeübt werden, bevorzugt ausschließlich bei einem Schubbetrieb des Triebstrangs. Dies hat außerdem den Vorteil, dass der Wirkungsgrad der Windturbine durch die aktive Dämpfung kaum reduziert wird, während naturgemäß mehr Energie verbraucht wird, wenn die aktive Dämpfung während des Zugbetriebs erfolgt. Im Rahmen dessen ist es von besonderem Nutzen, wenn aus den repräsentativen Parameterwerten ein Erkennungssignal zur Detektion einer Umstellung von Zugauf Schubbetrieb abgeleitet wird. Analog dazu wird bevorzugt auch ein Erkennungssignal zur Detektion einer Umstellung von Schub- auf Zugbetrieb abgeleitet. Diese Erkennungssignale wird in der Folge vorzugsweise dazu genutzt, die Steuerbefehle an die Bremsvorrichtung an den Schub- bzw. Zugbetrieb anzupassen. Es läuft also ein unterschiedliches Dämpfungsprogramm ab, je nachdem, ob sich die Windturbine im Zug- oder im Schubbetrieb befindet. In einem solchen Dämpfungsprogramm kann eben auch vorgesehen sein, keine aktive Dämpfung mithilfe der Bremsvorrichtung im Schubbetrieb durchzuführen oder im Zugbetrieb nur in Notfällen, etwa bei Erreichen sehr kritischer Schwingungsamplituden bei einer Resonanzfrequenz.

Als Einflussfaktor bei der Schwingungsdämpfung mithilfe einer Bremsvorrichtung kann der Zustand der Bremsvorrichtung selbst gelten. Die Bremsbacken werden abgenutzt und die Bremsscheibe der Bremsvorrichtung erfährt mit der Zeit unregelmäßige Verformungen und ebenfalls Abnutzungen sowie Ablagerungen durch Korrosion. Insbesondere durch Notbremsungen kann eine Bremsscheibe nämlich Temperaturen von 400° bis 600° C erreichen. Bei der Abkühlung, die lokal nicht gleichmäßig verläuft, wird die Bremsscheibe dann durch chemische und physikalische Effekte verformt. Es ergeben sich Asymmetrien. Vor diesem Hintergrund ist es bevorzugt, eine Einwirkungskraft auf eine Bremsscheibe der Bremsvorrichtung in Abhängigkeit von Gleichmäßigkeitsabweichungen der Bremsscheibe zu variieren. Dabei wird ein Parameterwert bzw. ein Messsignal abgefragt, das den Grad der Gleichmäßigkeit der Bremsscheibe repräsentiert und hieraus die Steuerbefehle zur Bremssteuerung in Abhängigkeit von der Stellung der Bremsscheibe variiert.

Bevorzugt werden die Parameterwerte auf Basis von Sensorsignalen aus einer Anzahl von Messsensoren, besonders bevorzugt von Vibrationssensoren zur Messung von Vibrationen an Komponenten der Windturbine und/oder von Kraftsensoren zur Messung der ausgeübten Dämpfungskräfte, ermittelt. Dabei können die Parameterwerte aus den Sensorsignalen abgeleitet werden oder direkt die Sensorsignale als Parameterwerte verwendet werden. Die Messsensoren können beispielsweise außerhalb der Windturbine angeordnet sein, vorzugsweise jedoch in ihrem Inneren, also näher an den zu ermittelnden Schwingungen des Triebstrangs und von äußeren Einflüssen durch Wetter und andere Außeneinwirkungen geschützt. Die Messsensoren befinden sich insbesondere bevorzugt am Triebstrang und/oder an einer mit dem Triebstrang verbundenen Komponente der Windturbine, etwa dem Generator, einem Übersetzungsgetriebe oder am Rotor. Die Messsensoren können auch Sensoren zur Messung des Drehmoments des Triebstrangs und/oder seiner Drehzahl umfassen, wobei solche Messsensoren beispielsweise auch Parameterwerte liefern können, aus denen Rückschlüsse darauf gezogen werden können, ob sich die Windturbine gerade im Schub- oder im Zugbetrieb befindet. Die Messung der ausgeübten Dämpfungskräfte ermöglicht eine Rückkopplung von Parameterwerten in das System, die den Effekt der Dämpfungsmaßnahmen abbilden helfen. Andere (zusätzlich oder alternativ verwendbare) Messsensoren umfassen Sensoren zur Messung der Windgeschwindigkeit, Windrichtung und von Turbulenzen und zur Wegmessung (beispielsweise zur Ermittlung der axialen Verschiebung des Triebstrangs bzw. einzelner Triebstrangkomponenten oder des Getriebegehäuses eines Übersetzungsgetriebes). Aus den aus der jeweiligen Messung abgeleiteten Parameterwerten können dann Rückschlüsse gezogen werden auf das Schwingungsverhalten des Triebstrangs.

Die genaue Abstimmung der Dämpfungskräfte kann zusätzlich durch eine Vorsteuerung verfeinert werden. Dies bedeutet also, dass Steuerbefehle zur Ausübung der Dämpfungskräfte auf Basis von aus den Parameterwerten abgeleiteten Vorsteuersignalen generiert werden. Solche Vorsteuersignale basieren auf einer Prognose der Schwingungsentwicklung des Triebstrangs auf Basis von Parameter-Entwicklungswerten, also Werten, die die Entwicklung von Werten eines betrachteten Parameters und/oder einer Kombination von Parametern repräsentieren. Hieraus lassen sich Zukunftsentwicklungen der Schwingung des Triebstrangs für kurze Zeit relativ adäquat vorausberechnen. Aus Parameterwerten zu Parametern wie Drehzahlen, Drehmomenten, Stellung und Rundlauf der Bremsscheibe werden Sollwerte in Abhängigkeit eines aktuellen Dämpfungssteuerbefehls ermittelt; zusätzlich erhält die Vorsteuerung Parameterwerte aus der Umgebung, so dass eine Prognose der weiteren Entwicklung von Parameterwerten als Effekt der Dämpfung ermöglicht wird. Hieraus ergibt sich eine Soll-Zustandsgröße, die in eine Rückführung eingespeist und mit Ist-Zustandsgrößen verglichen wird. Die Steuerung reagiert damit nicht akut, sondern hat als Basis bereits vorab berechnete Erwartungswerte oder Führungssignale, die dann immer wieder im Finetuning innerhalb eines geschlossenen Regelkreises mit tatsächlichen Messwerten bzw. Parameterwerten abgeglichen werden können. Dadurch wird die Steuerung schneller und akkurater.

Eine solche Zustandsschätzung kann beispielsweise mithilfe eines Kalman-Filters durchgeführt werden: Mithilfe dieses Filters sind bei Vorliegen lediglich fehlerbehafteter Beobachtungen Rückschlüsse auf den Zustand von vielen der Technologien, Wissenschaften und des Managements zugeordneten Systemen möglich. Vereinfacht gesprochen dient das Kalman-Filter zum Entfernen der von Messgeräten verursachten Störungen. Dabei müssen sowohl die mathematische Struktur des zugrundeliegenden dynamischen Systems als auch die der Messverfälschungen bekannt sein.

Prinzipiell ist es möglich, direkt aus ermittelten Parameterwerten, etwa aus Werten einer Kraftmessung am Triebstrang, Steuerbefehle abzuleiten, die eine Krafteinwirkung mithilfe der Bremsvorrichtung direkt gegen die ermittelten Kräfte bewirken. Bevorzugt wird aus den Parameterwerten eine Kurve von zu dämpfenden Schwingungen ermittelt und werden die Dämpfungskräfte in Richtung und/oder Stärke und/oder Frequenzbevorzugt in Hinblick auf all diese drei Kenngrößen - gegengleich zur ermittelten Kurve ausgeübt. Entsprechend werden aus der Kurve Steuerbefehle abgeleitet, die bevorzugt die Form einer genau gegenläufigen Kurve aufweisen.

Ein besonders bevorzugtes Einsatzfeld der Erfindung betrifft solche Windturbinen, bei denen der Triebstrang eine erste Welle und eine zweite Welle als Triebstrangkomponenten umfasst, die über ein Übersetzungsgetriebe miteinander verbunden sind. Hier ist eine aktive Dämpfung besonders vorteilhaft, denn das Übersetzungsgetriebe erzeugt ja, wie oben beschrieben, zusätzliche hochfrequente Schwingungen. Bevorzugt ist die Bremsvorrichtung dabei im Bereich der zweiten Welle angeordnet, also der Welle, die vom Übersetzungsgetriebe in Richtung des Generators führt. Hier treten erfahrungsgemäß die größten Schwingungsamplituden entlang des gesamten Triebstrangs auf, so dass die aktive Dämpfung gerade am Einsatzort der Bremsvorrichtung besonders effektiv eingesetzt werden kann.

Das Übersetzungsgetriebe übersetzt die niedrige Drehgeschwindigkeit in der ersten Welle in höhere Drehgeschwindigkeiten der zweiten Welle, so dass einerseits leichtere Generatoren angetrieben werden können und andererseits die Bremsung des Triebstrangs feiner abgestimmt werden kann: Die Bremsung und Dämpfung einer schneller rotierenden Welle (im Vergleich zu Rotationsgeschwindigkeit des Rotors und einer mit ihm direkt verbundenen ersten Welle) kann deshalb präziser erfolgen, weil die Bremswirkung in absoluten Werten der Geschwindigkeitsreduzierung einfacher messbar ist als bei langsamen rotierenden Wellen. Gleiches gilt für die Dämpfwirkung in Bezug auf absolute Werte der Dämpfungskrafteinwirkung. Zudem ist damit die zweite Welle weniger träge als die langsam laufende erste Welle.

Bei Windturbinen mit einer Keilbremse umfasst die Keilbremse bevorzugt folgende Komponenten:
- eine mit einer zu bremsenden Triebstrangkomponente verbundene Bremsscheibe,
- eine an mindestens einer Flachseite der Bremsscheibe angeordnete, fest installierte Haltekonstruktion mit einer Führungsfläche,
- einen auf der Führungsfläche gelagerten Bremskeil, mit einer der Führungsfläche zugewandten Oberfläche, die in ihrer Form mit der der Führungsfläche korrespondiert,
- einen Aktuator, der im Betrieb den Bremskeil entlang der Führungsfläche verschiebt.

Der Bremskeil kann mit der Führungsfläche sowohl direkt als auch indirekt in Berührung stehen. Er kann beispielsweise über Rollen mit der Führungsfläche verbunden werden oder mithilfe eines geeigneten Gleitmittels daran entlang gleiten.

Der Bremskeil umfasst vorzugsweise einen an der der Führungsfläche in Richtung der Bremsscheibe gegenüberliegenden Seite des Bremskeils angebrachten Bremsbelag, der im Bremsbetrieb auf die Bremsscheibe gedrückt wird.

Eine derartige Anordnung der Komponenten einer Keilbremse ist einfach zu assemblieren (ggf. auch in bestehenden Bremsvorrichtungen nachzurüsten) und unkompliziert in der Handhabung; insbesondere die Führung des Bremskeils entlang der Führungsfläche führt dazu, dass durch die Form von Bremskeil und Führungsfläche die Bremswirkung der Keilbremse vorab eingestellt werden kann. Beispielsweise kann die Formgebung der Führungsfläche und oder des Bremskeils so gestaltet sein, dass sich bei Bewegung des Bremskeils nicht eine lineare Krafterhöhung ergibt, sondern eine potenzierte oder im Gegenteil eine nur langsamer ansteigende Krafterhöhung.

Eine Keilbremse mit den eben beschriebenen Komponenten wird vorteilhafterweise durch einen Elektromotor als Aktuator bedient, der bevorzugt von einer elektronischen Steuereinrichtung geregelt wird. Dadurch ist es möglich, dass ein möglichst weitgehend elektronisches bzw. elektrisches System verwendet wird, bei dem nur die zuvor beschriebenen Komponenten der Bremsvorrichtung mechanisch ausgeführt sind und die Regelung vollkommen unter elektronischer Kontrolle erfolgt.

Was die Formgebung der Führungsfläche der Keilbremse angeht, so ist gemäß seiner ersten prinzipiellen Alternative vorgesehen, dass sie eben ist und schräg zu einer Rotationsachse der zu bremsenden Triebstrangkomponente ausgerichtet ist. Dabei ist die Führungsfläche bevorzugt steil auf eine zu bremsende Bremsscheibe zulaufend. Eine Abart dieser ersten Alternative besteht darin, dass die Führungsfläche nicht eben ist, sondern in der Art einer Kulisse eine monoton, bevorzugt streng monoton steigende oder fallende Kurse im Querschnitt beschreibt. Dies führt zu dem bereits oben erwähnten Effekt eine nicht-linearen Verstärkung der Bremskraft bei Veränderung der Position des Bremskeils. Bevorzugt weist der Bremskeil eine an diese Form der Führungsfläche angepasste Form auf.

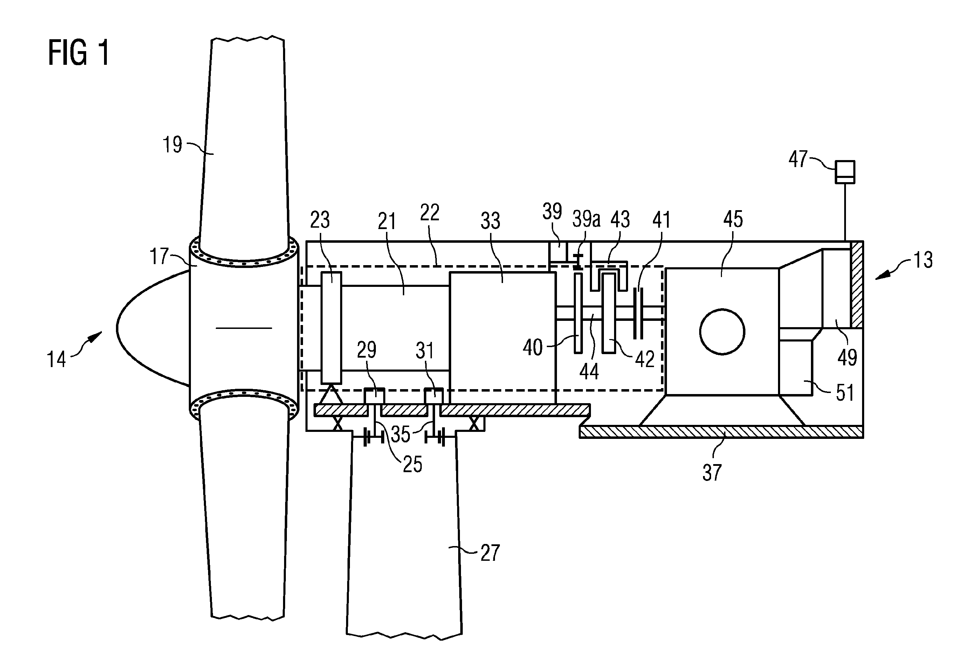

Eine zweite prinzipielle Alternative besteht in einer zickzackförmigen, beispielsweise W-förmigen Führungsfläche und/oder Oberfläche des Bremskeils. Bevorzugt ist sowohl die Führungsfläche als auch die Oberfläche des Bremskeils analog zickzackförmig ausgebildet. Eine solche Zickzackform ist beispielsweise in dem Artikel Roberts, Richard et al.: "Testing the Mechatronic Wedge Brake" SAE paper 2004-01-2766 in Figur 1 dargestellt und im Begleittext beschrieben. Die Lehre dieser Beschreibung wird entsprechend als Lehre in diese Patentanmeldung inkorporiert.

Bei der Zickzackform muss es sich allerdings nicht notwendigerweise um eine eckige Zickzackform, sondern es kann sich auch um eine gerundete Form handeln. Mit anderen Worten weist der Führungsfläche und/oder die Oberfläche des Bremskeils Erhöhungen und Vertiefungen auf, so dass der Bremskeil von einem Ausgangs-Nullpunkt gegen die Führungsfläche in zwei unterschiedliche Richtungen bewegt werden kann, um eine Bremskrafterhöhung zu erzielen. Bei dieser Alternative ist ein engerer Kontakt zwischen der Führungsfläche und dem Bremskeil möglich; dadurch kann ein kompakteres System realisiert werden, da es in sich deswegen stabiler ist, weil der Bremskeil nicht etwa in einer Richtung vollständig von der Führungsfläche entschlüpfen kann.

Eine erfindungsgemäße Windturbine umfasst in einer besonders vorteilhaften Weiterbildung eine Mehrzahl von Bremsvorrichtungen. Dabei kann eine Bremsvorrichtung so ausgebildet und/oder gesteuert sein, dass sie dem reinen Bremsen des Triebstrangs dient. Eine solche Bremsvorrichtung unterliegt damit einem einfacheren Steuerungsschema. Andere Bremsvorrichtungen können dann ausschließlich oder unter anderem für die Schwingungsdämpfung ausgebildet und/oder entsprechend gesteuert sein. Bevorzugt sind jedoch mindestens zwei solcher Bremsvorrichtungen, besonders bevorzugt alle Bremsvorrichtungen so ausgebildet bzw. gesteuert, dass sie zur Schwingungsdämpfung herangezogen werden können.

Die Verwendung mehrerer Bremsvorrichtungen bietet im Rahmen der Erfindung den besonderen Vorteil, dass mehrere Bremsvorrichtungen einander im Betrieb, beispielsweise bei Notbremsungen, besser entlasten können und somit weniger beansprucht und verschlissen werden. Dies führt dann zu geringeren Unregelmäßigkeiten der Bremsscheiben und damit im Effekt zu einer genaueren Abstimmbarkeit der Dämpfungskräfte, die durch jede Bremsvorrichtung ausgeübt werden können. Außerdem kann die aktive Dämpfungswirkung auch noch lokal variiert werden, so dass Dämpfungskräfte insbesondere dort in den Triebstrang eingebracht werden können, wo sie besonders gut zu dämpfen sind. Ist die Schwindungsamplitude also an einem Ort besonders hoch, so wird bevorzugt in erster Linie diejenige der Bremsvorrichtungen zur Dämpfung verwendet, die diesem Ort am nächsten liegt. Zudem können die Bremsvorrichtungen unterschiedlich angeordnet sein, so dass beispielsweise eine Bremsvorrichtung eine Dämpfungskraft (und Bremskraft) von einer Seite einbringt und eine andere Bremsvorrichtung von oben. Dies hat den Effekt, dass auch Schwingungen mit unterschiedlichen Schwingungsrichtungen möglichst effektiv abgedämpft werden können.

Vor diesem Hintergrund wird es weiterhin vom Erfinder angestrebt, dass mindestens zwei der Bremsvorrichtungen, bevorzugt alle Bremsvorrichtungen, unabhängig voneinander angesteuert werden. Eine Unabhängige Ansteuerung bedeutet in diesem Zusammenhang, dass unterschiedliche Steuerbefehle an die einzelnen Bremsvorrichtungen geleitet werden. Diese Steuerbefehle können jedoch im Großen durchaus - dies ist gar bevorzugt - in einem Gesamtzusammenhang stehen, so dass eine Abstimmung der Steuerbefehle an die einzelnen Bremsvorrichtungen stattfindet. Damit ist eine "konzertierte" Dämpfungsaktion der unabhängigen Bremsvorrichtungen möglich, die Dämpfungskräfte addieren sich in Betrag und Richtung zu einer Gesamt-Dämpfungskraft aller Bremsvorrichtungen, die der vom Kontrollsystem gewünschten Dämpfungswirkung entspricht.

Es sei noch erwähnt, dass eine Bremsvorrichtung auch zur Dämpfung bei schwereren Erschütterungsschwingungen bei starken, plötzlich auftretenden Kräften verwendet werden kann, beispielsweise im Falle eines Netzausfalls der Windturbine: Durch den dämpfenden Bremseingriff verhindert die Bremsvorrichtung, dass sich die Kanzel zusammen mit dem Turm der Windturbine gegen den Wind bewegt bzw. dass der Turm (in Abhängigkeit von der Windrichtung) unerwünscht stark tordiert. Die Wirkung des Rotors gleicht dabei der eines Flugzeugpropellers: Es wird indirekt durch den Dämpfungseingriff der Bremsvorrichtung ein Gegenmoment erwirkt, das die Bewegung von Kanzel und Turm und damit auch die Torsion des letzteren signifikant reduziert.

Die Erfindung wird im Folgenden unter Hinweis auf die beigefügten Figuren anhand von Ausführungsbeispielen noch einmal näher erläutert. Dabei sind in den verschiedenen Figuren gleiche Komponenten mit identischen Bezugsziffern versehen. Es zeigen:
Figur 1 eine Seitenansicht einer Ausführungsform einer erfindungsgemäßen Windturbine in einem geöffneten Zustand ihrer Kabine,
Figur 2 eine stark vereinfachte Prinzipdarstellung einer Keilbremse im Querschnitt,
Figur 3 eine Detailansicht aus Figur 1 auf Teile des Triebstrangs und auf die Bremsvorrichtung der Windturbine,
Figur 4 ein schematisches Blockdiagramm zum Ablauf eines Schwingungsdämpfungsverfahrens gemäß einer Ausführungsform der Erfindung,
Figur 5 ein schematisches Blockdiagramm zum Ablauf eines Steuerungsvorgangs der Bremsvorrichtung mit Vorsteuerung, wie er im Rahmen eines erfindungsgemäßen Schwingungsdämpfungsverfahrens zum Einsatz kommen kann,
Figur 6 eine schematische Steuerungskurve in Relation zu einer Schwingungskurve eines Triebstrangs, wie sie im Rahmen eines erfindungsgemäßen Schwingungsdämpfungsverfahrens abgeleitet werden kann.

Figur 1 zeigt eine Windturbine 13 gemäß einer Ausführungsform der Erfindung. An ihrer vorderen, dem Wind zugewandten Seite weist sie einen Rotor 14 auf, der mehrere Rotorblätter 19 aufweist. Diese sind mit einer Nabe 17 verbunden. Von der Nabe 17 führt eine erste Welle 21 in das Innere der Kanzel 37 der Windturbine 13. Die erste Welle ist über eine elastische Hauptlagerung 23 und ein erstes Joch 25 sowie ein zweites Joch 35 (deren Position mittels Motoren 29, 31 verstellbar sind) in der Kanzel 37 gelagert.

Ein Getriebe 33 wandelt die Rotation der ersten Welle 21 in eine Rotation einer zweiten Welle 44 um, wobei die zweite Welle 44 an der von der zweiten Welle 21 abgewandten Seite des Getriebes 33 angeordnet ist. Die zweite Welle 44 führt in einen Generator 45, in dem Strom aus der Rotationsenergie der zweiten Welle 44 gewonnen wird. Eine Kopplung 41 dient dazu, die zweite Welle 44 ein- oder auszukoppeln, um in Gefahrensituationen den Generator 45 von der Rotation der zweiten Welle 44 entkoppeln zu können. Die erste Welle 21 und die zweite Welle 44 sind gemeinsam Teil eines Triebstrangs 22. Der Generator 45 wird mit einem Wasserkühler 49 und mit einem zusätzlichen Ventilator 51 gekühlt. Statt des Wasserkühlers 49 kann auch ein Ölkühler verwendet werden.

Die Kanzel 37 ist drehbar auf einem Turm 27 gelagert. An der Außenseite der Kanzel 37 ist ein meteorologischer Sensor 47 angebracht, der meteorologische Daten, beispielsweise zur Windlage, zu Temperaturen, zu Wolken- und Sichtverhältnissen uvm. zur Verfügung stellt.

Im Bereich der zweiten Welle 44 befindet sich ein Verstellmotor 39, der an einem Zahnrad 40 verzahnt ist, welches mit der zweiten Welle 44 verbunden ist. Außerdem ist eine Bremsscheibe 42 mit der zweiten Welle 44 verbunden, die durch eine Bremsvorrichtung 43 gebremst wird.

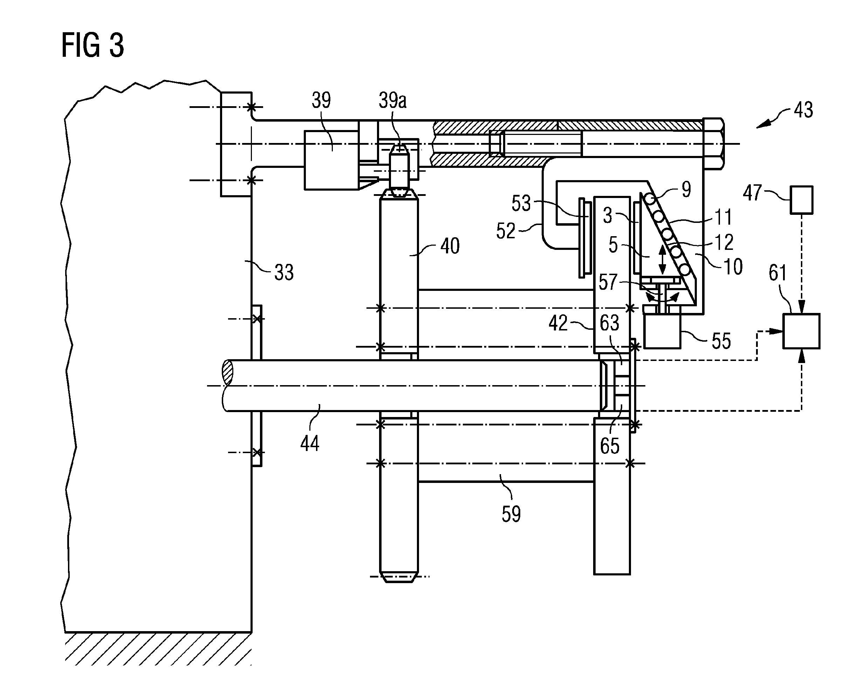

Die Bremsvorrichtung 43 ist so ausgebildet, dass sie gesteuert Dämpfungskräfte auf den Triebstrang 22 ausübt, die gegen unerwünschte Schwingungen des Triebstrangs wirken. Diese Wirkungsweise wird anhand der Figuren 3 bis 6 noch detaillierter beschrieben.

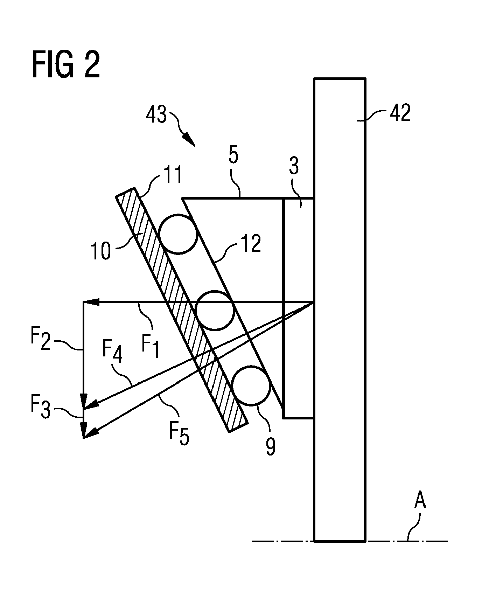

Figur 2 zeigt zur Demonstration der Wirkungsweise von Keilbremsen eine Keilbremse 43 in einer Prinzipdarstellung als seitliche Ansicht. Sie weist einen Bremskeil 5 auf, der über Gleitrollen 9 entlang einer Führungsebene 11 einer Haltekonstruktion 10 beweglich ist. Eine Oberfläche oder Lagerfläche 12 des Bremskeils 5 weist in Richtung der Führungsebene 11, an der entlang die Gleitrollen 9 gelagert sind. Auf der der Lagerfläche 12 entgegengesetzten Seite des Bremskeils 5 befindet sich ein Bremsbelag 3, der in Richtung einer Bremsscheibe 42 weist. Die Bremsscheibe 42 rotiert um eine Achse A, zu der die Führungsebene 11 schräg, das heißt in einem Winkel ungleich 180° und ungleich 90° ausgerichtet ist. Dies bedeutet, dass die Bremsscheibe 42 in Blickrichtung des Betrachters rotiert.

Wenn der Bremskeil 5 mit dem Bremsbelag 3 an der Bremsscheibe 42 anliegt, so besteht eine Normalkraft F₁ an der Bremsscheibe 42 und in tangentialer Richtung zur Normalkraft F₁ eine Reibungskraft F₂. Aus der Kombination dieser beiden Kräfte F₁, F₂ resultiert in einem Dreieck eine kombinierte Bremskraft F₄. In diesem Kräftegleichgewicht spielt sich die Bremsung der Bremsscheibe 42 ab. Wird nun der Bremskeil 5 weiter in Richtung der Achse A durch eine Aktuatorkraft F₃ gedrückt, so resultiert daraus eine stärkere Bremskraft F₅. Durch Verschieben des Bremskeils 5 in Richtung der Rotationsachse A ist so eine Erhöhung der Bremskraft der Keilbremse 43 zu erzielen. Dabei erhöht sich die Bremskraft der Keilbremse 43 zwar nicht genauso stark wie die Aktuatorkraft F₃, doch muss nach dem Verschieben des Bremskeils 5 keine weitere zusätzliche Kraft mehr aufgebracht werden, um den Bremskeil 5 in Position zu halten. Stattdessen entsteht ein neues Kräftegleichgewicht mit einer konstanten Bremskraft F₅. Die notwendige Aktuatorkraft F₃ ist im Endeffekt abhängig von den Reibeeigenschaften des Kontakts zwischen der Bremsscheibe 42 und dem Bremsbelag 3. Die Keilbremse 43 hat ihrem optimalen Bremspunkt erreicht, wenn keine zusätzliche Aktuatorkraft F₃ mehr aufgewandt werden muss, um den Bremskeil 5 weiter in Richtung der Achse A zu verschieben, um dadurch die jeweils gewünschte Bremskraft zu erzielen. Eine Steuereinrichtung, die die Aktuatorkraft F₃ reguliert, zielt im Endeffekt auf das Erreichen genau dieses Punktes ab, indem ein Gleichgewicht der Kräfte erreicht ist.

Im Rahmen der Erfindung kommt bevorzugt eine Keilbremse zum Einsatz, obwohl es prinzipiell auch möglich ist, andere Arten von Bremsvorrichtungen zu verwenden.

Figur 3 zeigt in größerem Detail aus Figur 1 den Bereich der zweiten Welle 44, insbesondere der Bremsvorrichtung 43. Von dem Getriebe 33 führt die zweite Welle 44 in Richtung des Generators 45 (hier nicht gezeigt). Das Zahnrad 40 ist verbunden mit dem Verstellmotor 39, der über ein Zahnrad 39a in das Zahnrad 40 eingreift. Mithilfe des Verstellmotors 39 kann die Drehposition der zweiten Welle 44 so verstellt werden, dass eine Arretierungsvorrichtung 59 in einer bestimmten Arretierungsposition in das Zahnrad 40 eingreifen und es so fixieren kann. Damit ist zugleich die zweite Welle 44, und indirekt über das Getriebe 33 auch die erste Welle 21 fixiert und kann nicht rotieren. Weiter in Richtung des Generators 45 ist als nächstes eine Bremsscheibe 42 angeordnet sowie zwei Sensoren 63, 65, die einerseits die Drehgeschwindigkeit bzw. das Drehmoment der zweiten Welle 44 und dadurch indirekt ihre Vibrationen, also die störenden Schwingungen, messen, die im Rahmen der Erfindung gedämpft werden sollen.

Wie erwähnt ist im vorliegenden Ausführungsbeispiel die Bremsvorrichtung 43 zur Dämpfung der Vibrationen als Keilbremse realisiert. Dies bedeutet, dass ein Bremskeil 5 nach dem in Figur 2 gezeigten Prinzip entlang von Gleitrollen 9 über eine Führungsfläche 51 nach oben bzw. unten bewegt wird, um die gewünschte Bremskraft F₃, F₅ (vgl. Fig. 2) an der Brennscheibe 42 zu erzielen. Neben dem bereits in Figur 2 gezeigten Bremsbelag 3 ist über einen Bremssattel 52 auf der dem Bremsbelag 3 gegenüberliegenden Seite ein zweiter Bremsbelag 53 angeordnet, so dass das Verschieben des Bremskeils 5 der Keilbremse 43 eine Art Einklemmung der Bremsscheibe 42 zwischen dem (ersten) Bremsbelag 3 und dem zweiten Bremsbelag 53 bewirkt. Ein elektrischer Stellmotor 55 verstellt über ein Verstellrad 57 die Position des Bremskeils 5 der Keilbremse 43 so, dass die gewünschte Bremskraft F₃, F₅ erreicht wird.

Der Verstellmotor 55 wird von einer Steuereinrichtung 61 gesteuert, die sich hierzu aus Eingangsdaten aus Sensoren, insbesondere dem Drehsensor 63, dem Vibrationssensor 65 und dem meteorologischen Sensor 47, bedient und hieraus Steuerbefehle ableitet, unter anderem zur aktiven Dämpfung von Vibrationen der zweiten Welle 44. Diese Eingangsdaten sind Parameterwerte, die das Schwingungsverhalten des Triebstrangs repräsentieren.

Die Daten aus diesen Sensoren können außerdem Aufschluss darüber geben, ob Gefahrensituationen bestehen, aufgrund derer die Drehgeschwindigkeit der zweiten Welle 44 bzw. des gesamten Triebstrangs 22 reduziert bzw. komplett auf Null gebracht werden sollte. Im Endeffekt kann also die Steuereinrichtung 61 in Abhängigkeit von diesen und weiteren Eingangsdaten (beispielsweise auch Messdaten zur aktuellen Bremswirkung der Keilbremse 43) genau die optimale momentane Brems- bzw. Dämpfungskraft der Keilbremse 43 einstellen.

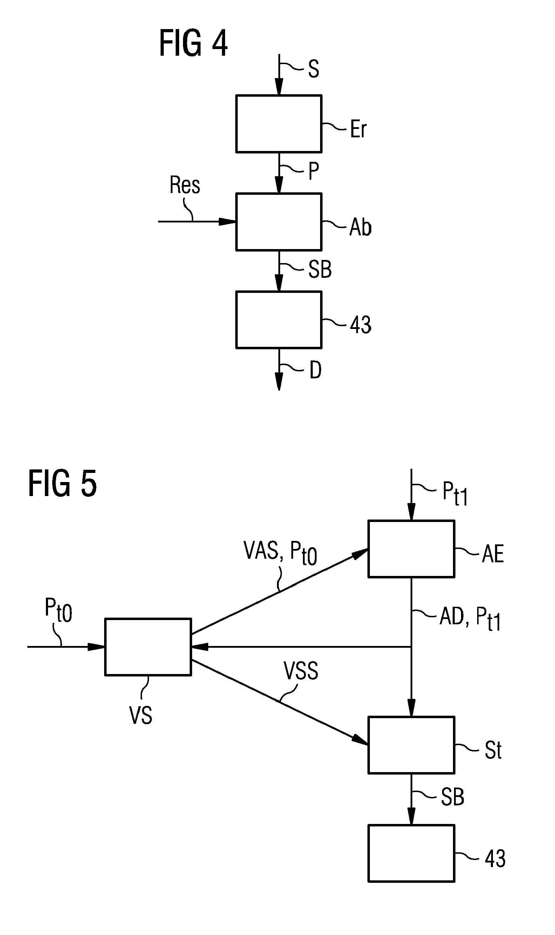

Figur 4 zeigt ein schematisches Ablaufdiagramm eines Schwingungsdämpfungsverfahrens gemäß einer Ausführungsform der Erfindung. Aus Schwingungen S des Triebstrangs 22 (vgl. Fig. 1 und 3) können für diese Schwingungen S repräsentative Parameterwerte P ermittelt werden. Dies ist beispielsweise mithilfe der Sensoren 63, 65 (vgl. Fig. 3) möglich. In einem Ableitungsschritt Ab werden diese Parameterwerte P dazu verwendet, Steuerbefehle SB zur Schwingungsdämpfung der Schwingungen S abzuleiten. Als zusätzlicher Input können Informationen über Resonanzfrequenzen Res des Triebstrangs 22 oder der Windturbine 13 bzw. einzelner ihrer Komponenten dienen, also Informationen darüber, in welchen Frequenzbereichen Schwingungen besonderen Schaden in der Windturbine 13 anrichten können. Die so generierten Steuerbefehle werden an die Bremsvorrichtung 43 weitergeleitet, durch deren Aktivierung Dämpfungskräfte D auf den Triebstrang 22, genauer: auf die zweite Welle 44, ausgeübt werden.

Figur 5 ein schematisches Blockdiagramm zum Ablauf eines Steuerungsvorgangs. Parameterwerte Pₜ₀, die zu einem ersten Zeitpunkt abgefragt werden, finden Eingang in eine Vorsteuerung VS. Diese Parameterwerte Pₜ₀ umfassen beispielsweise Messwerte der Drehzahl und/oder des Drehmoments der zweiten Welle 44, des Drehmoments und der Drehzahl des Rotors 14 bzw. der ersten Welle 21, der Windgeschwindigkeit. Sie können außerdem Messwerte zu Nick- und Giermomenten, der axialen Verschiebung des Triebstrangs 22 (bzw. einzelner seiner Komponenten), zum Scheibenzustand der Bremsscheibe 42 und zur momentanen Klemmkraft der Bremsvorrichtung 43 (also der Kraft, die auf die Bremsscheibe 42 ausgeübt wird) uvm. umfassen. Hieraus leitet die Vorsteuerung VS Vorsteuerungssignale VSS ab, die Informationen darüber beinhalten, wie hoch in etwa zu einem zweiten (späteren) Zeitpunkt eine durch die Bremsvorrichtung 43 ausgeübte Bremskraft sein sollte. Diese Vorsteuerungssignale VSS werden in eine Steuerung St eingespeist, die hieraus Steuerbefehle SB generiert, die sie an die Bremsvorrichtung 43 zur Umsetzung weitergibt.

Die ersten Parameterwerte Pₜ₀ und Vorsteuerungsabgleichsignale VAS werden außerdem an eine Abgleicheinheit AE weitergegeben. Die Vorsteuerungsabgleichsignale VAS beinhalten Informationen aus der Vorsteuerung VS, welche Zustandsrückschlüsse die Vorsteuerung VS aus den ersten Parameterwerten Pₜ₀ über den Schwingungszustand des Triebstrangs 22 gezogen hat, insbesondere welche Parameterwerte in etwa als nächstes zu erwarten sind, nachdem ein dämpfender Eingriff durch die Bremsvorrichtung 43 erfolgt ist. In der Abgleicheinheit AE laufen zum zweiten Zeitpunkt, nämlich nach der ersten Betätigung der Dämpfungswirkung der Bremsvorrichtung 43, analoge zweite Parameterwerte Pₜ₁ ein. Die Abgleicheinheit AE vergleicht die zweiten Parameterwerte Pₜ₁ mit den Vorsteuerungsabgleichsignalen VAS bzw. mit den ersten Parameterwerten Pₜ₀ und erzeugt hieraus Abgleichdaten AD. Diese leitet sie zusammen mit den zweiten Parameterwerten Pₜ₁ zurück an die Vorsteuerung VS, die daraus Rückschlüsse auf die weitere Entwicklung der Schwingungen S im Triebstrang 22 zieht. Die Abgleichdaten AD werden ebenfalls an die Steuerung St weitergegeben, so dass auch die Steuerung St hieraus Rückschlüsse auf das zukünftig notwendige Dämpfungsverhalten zieht.

Dieser Kreislauf wiederholt sich ständig, so dass in einem geschlossenen Kreis eine ständig verfeinerte Regelung der Dämpfungskraft der Bremsvorrichtung 43 erzielt werden kann.

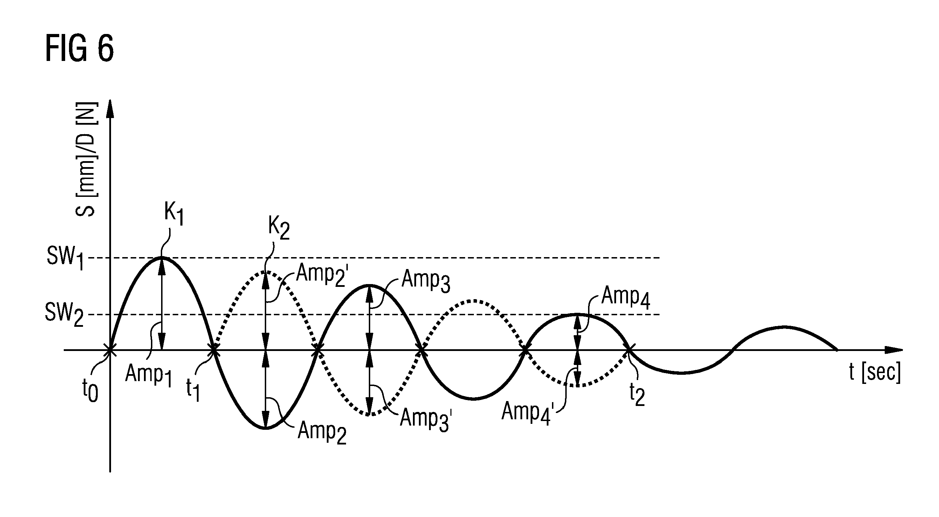

Figur 6 zeigt aufgetragen über die Zeit t (in Sekunden, ohne Skalierung) eine schematische Steuerungskurve K₂ in Relation zu einer stark schematisierten Schwingungskurve K₁ des Triebstrangs 22, wie sie im Rahmen eines erfindungsgemäßen Schwingungsdämpfungsverfahrens abgeleitet werden kann. Die y-Koordinate zeigt in Bezug auf die Schwingungskurve K₁ den Weg s (in mm, ohne Skalierung), den die Schwingungen S vollziehen. In Bezug auf die Steuerungskurve K₂ zeigt sie die aus den Steuerbefehlen abzuleitende Dämpfungskraft D (in N, ohne Skalierung). Die Schwingungskurve K₁ ist aus Parameterwerten P wie anhand von Figur 4 erläutert, abgeleitet.

Die Schwingungskurve K₁ ist hier sehr vereinfacht als Sinuskurve mit einer festen Frequenz und ohne jegliche Unregelmäßigkeiten dargestellt. In der Praxis weicht sie meist deutlich von solch einem idealtypischen Verlauf ab, vor allem deshalb, weil mehrere Schwingungsarten (z.B. axiale und radiale und Torsionsschwingungen) überlagert werden. Dies bedeutet auch, dass die entsprechende Steuerungskurve K₂ dieser Komplexität Rechnung tragen wird. Die Ausführungen zum Schwingungs- und Steuerungsverhalten sind daher ebenfalls als schematisch vereinfacht zu begreifen.

Zu Beginn, an einem Zeitpunkt t₀, wird die Schwingung S noch nicht aktiv gedämpft. Die Schwingungskurve K₁ weist daher in einem kritischen Frequenzbereich, beispielsweise einer Resonanzfrequenz der Kanzel 37 eine relativ große erste Amplitude Amp₁ auf, die über einem oberen Schwellenwert SW₁ liegt. Durch Erreichen dieses Schwellenwerts SW₁ wird ein Alarmzustand ausgelöst, der bedeutet, dass eine aktive Schwingungsdämpfung eingeleitet werden soll.

Daher wird zu einem Zeitpunkt t₁, nämlich direkt nach der Feststellung der kritischen Frequenz und der hohen ersten Amplitude Amp₁, aktiv mithilfe der Bremsvorrichtung 42 gegen die Schwingung S gesteuert. Dabei beschreibt die Steuerungskurve K₂ eine entlang der t-Achse (also dem Schwingungsnullpunkt der Schwingungskurve K₁) achsensymmetrisch gespiegelten Verlauf, was darin resultiert, dass genau gegen den Kurvenverlauf der Schwingungskurve K₁ die Dämpfungskraft D ausgeübt wird, wobei der Betrag der Dämpfungskraft D in dem Maße steigt, wie auch der Betrag der Abweichung des Triebstrangs 22 vom Schwingungsnullpunkt der Schwingungskurve K₁ steigt bzw. fällt. Die Amplituden Amp₂, Amp₃, Amp₄ der Schwingungskurve K₁, die nach dem Zeitpunkt t₁ ermittelt werden, fallen daher im Betrag geringer aus als die erste Amplitude Amp₁.

Die Amplituden Amp_{2',} Amp_{3'} Amp_{4'} der Dämpfungskurve K2 entsprechen den Amplituden Amp₂, Amp₃, Amp₄ der Schwingungskurve K₁ insofern, als sie im selben Maße kleiner werden wie die Amplituden Amp₂, Amp₃, Amp₄ der Schwingungskurve K₁. Die Amplitude Amp4 hat durch die Dämpfung nur noch einen Betrag, der unterhalb eines unteren Schwellenwerts SW₂ liegt. Dies bedeutet, dass der zuvor ausgelöste Alarmzustand nun aufgehoben werden kann. Ab einem Zeitpunkt t₂, direkt nach der Unterschreitung des unteren Schwellenwerts SW₂, wird daher die aktive Dämpfung mittels der Bremsvorrichtung 43 gestoppt. Die Schwingungskurve K₁ verläuft in gewünschten Bahnen mit niedriger Amplitude weiter, bis der obere Schwellenwert SW₁ wieder einmal erreicht wird. Die Dämpfung wird daher rein von den passiven Dämpfern in der Windturbine 13, also beispielsweise durch die Hauptlagerung 23, übernommen.

Es wird abschließend noch einmal darauf hingewiesen, dass es sich bei den vorhergehend detailliert beschriebenen Verfahren sowie bei der dargestellten Windturbine und ihren Komponenten lediglich um Ausführungsbeispiele handelt, welche vom Fachmann in verschiedenster Weise modifiziert werden können, ohne den Bereich der Erfindung zu verlassen. Weiterhin schließt die Verwendung der unbestimmten Artikel "ein" bzw. "eine" nicht aus, dass die betreffenden Merkmale auch mehrfach vorhanden sein können. Außerdem können "Einheiten" aus einer oder mehreren, auch räumlich verteilt angeordneten, Komponenten bestehen.

## Patentansprüche

1. Verfahren zur Schwingungsdämpfung eines Triebstrangs (22) in einer Windturbine (13), welcher Triebstrang (22) einen Rotor (14) mit einem Generator (45) verbindet, wobei Parameterwerte (P, Pₜ₀, Pₜ₁) ermittelt werden, die eine Schwingung (S) des Triebstrangs (22) repräsentieren, und auf Basis der ermittelten Parameterwerte (P, Pₜ₀, Pₜ₁) gesteuert unter Verwendung einer Bremsvorrichtung (43) Dämpfungskräfte (D) auf den Triebstrang (22) ausgeübt werden, die gegen die Schwingung (S) des Triebstrangs (22) wirken.

2. Verfahren gemäß Anspruch 1, wobei die Steuerung der Bremsvorrichtung (43) elektronisch erfolgt.

3. Verfahren gemäß Anspruch 1 oder 2, wobei als Bremsvorrichtung eine eine Keilbremse (43) umfassende Bremsvorrichtung verwendet wird, die bevorzugt mit einer elektronischen Bremskraftregelung gesteuert wird.

4. Verfahren gemäß einem der vorhergehenden Ansprüche, wobei Steuerbefehle (SB) zur Ansteuerung der Bremsvorrichtung (43) zur Aktivierung der Dämpfungskräfte (D) in Abhängigkeit von Resonanzfrequenzen (Res) von Komponenten der Windturbine (13) abgeleitet werden, welche Resonanzfrequenzen (Res) vor Inbetriebnahme der Windturbine (13), bevorzugt durch Simulation und/oder Messungen, und/oder im laufenden Betrieb der Windturbine (13) ermittelt wurden.

5. Verfahren gemäß einem der vorhergehenden Ansprüche, wobei die Dämpfungskräfte (D) bei einem Schubbetrieb des Triebstrangs (22) ausgeübt werden.

6. Verfahren gemäß einem der vorhergehenden Ansprüche, wobei eine Einwirkungskraft (F₁, F₂, F₃) auf eine Bremsscheibe (42) der Bremsvorrichtung (43) in Abhängigkeit von Gleichmäßigkeitsabweichungen der Bremsscheibe (42) variiert wird.

7. Verfahren gemäß einem der vorhergehenden Ansprüche, wobei die Parameterwerte (P, Pₜ₀, Pₜ₁) auf Basis von Sensorsignalen aus einer Anzahl von Messsensoren (63, 65), bevorzugt von Vibrationssensoren zur Messung von Vibrationen an Komponenten der Windturbine (13) und/oder von Kraftsensoren zur Messung der ausgeübten Dämpfungskräfte (D), ermittelt werden.

8. Verfahren gemäß einem der vorhergehenden Ansprüche, wobei Steuerbefehle (SB) zur Ausübung der Dämpfungskräfte (D) auf Basis von aus den Parameterwerten (P, Pₜ₀, Pₜ₁) abgeleiteten Vorsteuersignalen (VSS) generiert werden.

9. Verfahren gemäß einem der vorhergehenden Ansprüche, wobei aus den Parameterwerten (P, Pₜ₀, Pₜ₁) eine Kurve von zu dämpfenden Schwingungen (S) ermittelt wird und die Dämpfungskräfte (D) in Richtung und/oder Stärke und/oder Frequenz gegengleich zur ermittelten Kurve ausgeübt werden.

10. Windturbine (13) mit einem Rotor (14) und einem Generator (45), die über einen Triebstrang (22) miteinander verbunden sind, sowie mit einer Bremsvorrichtung (43) und einer Steuereinrichtung (55), welche Steuereinrichtung (55) im Betrieb aus Parameterwerten (P, P₁, P₂, P₃, P₄), die eine Schwingung (S) des Triebstrangs (22) repräsentieren, Steuerbefehle (SB) zur Ausübung von Dämpfungskräften (D) auf den Triebstrang (22) unter Verwendung der Bremsvorrichtung (43) ableitet, welche Dämpfungskräfte (D) gesteuert gegen die Schwingung (S) des Triebstrangs (22) wirken.

11. Windturbine gemäß Anspruch 10, wobei der Triebstrang (22) eine erste Welle (21) und eine zweite Welle (44) als Triebstrangkomponenten umfasst, die über ein Übersetzungsgetriebe (33) miteinander verbunden sind.

12. Windturbine gemäß Anspruch 11, wobei die Bremsvorrichtung (43) im Bereich der zweiten Welle (44) angeordnet ist.

13. Windturbine gemäß einem der Ansprüche 10 bis 12, wobei die Bremsvorrichtung eine Keilbremse (43), bevorzugt eine elektronische Keilbremse umfasst.

14. Windturbine gemäß einem der Ansprüche 10 bis 13, umfassend eine Mehrzahl von Bremsvorrichtungen (43).

15. Verwendung einer Bremsvorrichtung (43) zur Schwingungsdämpfung eines Triebstrangs (22) in einer Windturbine (13), welcher Triebstrang (22) einen Rotor (14) mit einem Generator (45) verbindet, wobei Parameterwerte (P, Pₜ₀, Pₜ₁) ermittelt werden, die eine Schwingung (S) des Triebstrangs (22) repräsentieren und auf Basis der ermittelten Parameterwerte (P, Pₜ₀, Pₜ₁) gesteuert unter Verwendung der Bremsvorrichtung (43) Dämpfungskräfte (D) auf den Triebstrang (22) ausgeübt werden, die gegen die Schwingung (S) des Triebstrangs (22) wirken.
